# EUROPEAN PATENT APPLICATION

(11) **EP 4 759 973 A1**
(43) Date of publication of application: **17.06.2026**
(21) Application number: 25221385.5
(22) Date of filing: 08.12.2025
(51) Int. Cl.: C25D 7/06, H01M 4/66

(54) **CURRENT COLLECTOR, CURRENT COLLECTOR MANUFACTURING METHOD, BATTERY**

(30) Priority: 13.12.2024 JP 2024219440
(71) Applicant: Toyota Jidosha Kabushiki Kaisha, Toyota-shi, Aichi-ken 471-8571 (JP)
(72) Inventor: NISHIMURA, Hideaki, Toyota-shi,, 471-8571 (JP)
(74) Representative: Winter, Brandl - Partnerschaft mbB

(57) **Abstract**

A current collector comprising a first layer including a light metal, and a second layer including Ni chemical element, wherein the current collector has an X-ray diffraction pattern obtained by irradiating CuKα radiation onto the second layer using an X-ray diffraction (XRD) device, the X-ray diffraction pattern including diffraction peaks at positions of 2θ = 44.0° to 45.0°, 51.0° to 52.0°, 76.0° to 77.0°, 92.5° to 93.5°, and 98.0° to 99.0°, and a manufacturing method of the current collector and a battery employing the current collector.

## Description

### BACKGROUND

### Technical Field

The present disclosure relates to a current collector, a current collector manufacturing method, and a battery.

### Related Art

Electrodes of a secondary battery such as a lithium-ion secondary battery generally include a member that includes a metal called a current collector, and an electrode layer that includes an electrode active material disposed on the current collector.

Recently attempts are being made to replace copper, which is widely employed as the material for a negative electrode current collector, by another metal for such objectives as reducing the manufacturing cost of a battery and reducing the weight of a battery.

For example, in a secondary battery employing an electrolyte solution, a manufacturing method is known for a negative electrode current collector that has a covering film of nickel or copper formed on an aluminum foil in order to suppress alloying of lithium-ions by the electrolyte solution (see Japanese Patent Application Laid-Open (JP-A) No. 2018-116910).

### SUMMARY

In the manufacture of lightweight current collectors, the manufacture of lightweight batteries, and the like, for example, sometimes a strength of the current collector has been insufficient when the conveyance speed of the current collector has been raised.

An embodiment of the present disclosure addresses the issue of providing a current collector having enhanced weight reduction and strength. Moreover, an embodiment of the present disclosure addresses the issue of providing a manufacturing method of a current collector having enhanced weight reduction and strength. Moreover, an embodiment of the present disclosure addresses the issue of providing a battery that employs a current collector having enhanced weight reduction and strength.

The disclosure provides the following aspects:
A first aspect of the present disclosure provides a current collector comprising a first layer including a light metal and a second layer including Ni chemical element, wherein the current collector has an X-ray diffraction pattern obtained by irradiating CuKα radiation onto the second layer using an X-ray diffraction (XRD) device, the X-ray diffraction pattern including diffraction peaks at positions of 2θ = 44.0° to 45.0°, 51.0° to 52.0°, 76.0° to 77.0°, 92.5° to 93.5°, and 98.0° to 99.0°.
A second aspect of the present disclosure provides the current collector of the first aspect, wherein the first layer includes Al chemical element.
A third aspect of the present disclosure provides the current collector of the first or second aspect, wherein the X-ray diffraction pattern further includes a diffraction peak derived from Al chemical element.
A fourth aspect of the present disclosure provides the current collector of any one of the first to third aspects, wherein the first layer has a thickness of from 7 µm to 50 µm, and the second layer has a thickness of from 0.1 µm to 3 µm.
A fifth aspect of the present disclosure provides the current collector of any one of the first to fourth aspects, wherein a tensile strength at room temperature is at least 19 kgf/mm².
A sixth aspect of the present disclosure provides a current collector manufacturing method, comprising using electroplating to form a second layer including Ni chemical element on a first layer including a light metal.
A seventh aspect of the present disclosure provides the current collector manufacturing method of the sixth aspect, wherein the first layer includes Al chemical element.
An eighth aspect of the present disclosure provides the current collector manufacturing method of the sixth or seventh aspect, wherein the method includes forming the second layer at a thickness of from 0.1 µm to 3 µm on the first layer having a thickness of from 7 µm to 50 µm.
A ninth aspect of the present disclosure provides a battery comprising a first current collector, a first electrode layer, an electrolyte layer, a second electrode layer, and a second current collector, wherein the first current collector is the current collector of any one of the first to fifth aspects.
A tenth aspect of the present disclosure provides the battery of the ninth aspect, wherein the first electrode layer is a negative electrode layer.
An eleventh aspect of the present disclosure provides the battery of the tenth aspect, wherein the negative electrode layer includes a negative electrode active material that reacts at a potential of 0.3 V or less vs. Li/Li⁺.
A twelfth aspect of the present disclosure provides the battery of any one of the ninth to eleventh aspects, wherein the battery is a solid-state battery, and the electrolyte layer contains a solid electrolyte.

An embodiment of the present disclosure enables a current collector having enhanced weight reduction and strength to be provided. Moreover, an embodiment of the present disclosure enables a manufacturing method of a current collector having enhanced weight reduction and strength to be provided. Moreover, an embodiment of the present disclosure enables a battery employing a current collector having enhanced weight reduction and strength to be provided.

### BRIEF DESCRIPTION OF DRAWINGS

Exemplary embodiments of the present disclosure will be described in detail based on the following figures, wherein:
Fig. 1A is a schematic cross-section when a current collector 10 has been sectioned along a stacking direction X, and is employed to explain a configuration of the current collector 10 of an embodiment of the present disclosure;
Fig. 1B is a schematic cross-section to explain a configuration of a current collector 20 of an embodiment of the present disclosure when the current collector 20 has been sectioned along a stacking direction X;
Fig. 2 is a schematic cross-section to explain a configuration of a laminated electrode structure 30 included in a battery of an embodiment of the present disclosure when the laminated electrode structure 30 has been sectioned along a stacking direction X;
Fig. 3 is a graph illustrating X-ray diffraction patterns measured by an XRD device for each subject of the current collectors obtained by an Example and Comparative Example 1 to Comparative Example 3; and
Fig. 4 is a graph illustrating an X-ray diffraction pattern measured by an XRD device for a subject of the current collector obtained by Comparative Example 4.

### DETAILED DESCRIPTION

In the present disclosure a numerical range denoted using "to" indicates a range that includes the respective numerical values proceeding and following "to" as the minimum value and the maximum value thereof.

For a numerical range with a stepwise denotation in the present disclosure, an upper limit value or a lower limit value for one numerical range may be replaced with an upper limit value or a lower limit value for another stepwise numerical range. Moreover, in numerical ranges listed in the present disclosure, an upper limit value or a lower limit value of the numerical range may be replaced with a value indicated in an Example.

In the present disclosure the term "process" not only includes an isolated process, but as long as the intended objective of the process is achieved, the term may also include cases in which another process is unable to be clearly distinguished therefrom.

In the present disclosure, a combination of two or more preferable embodiments is a more preferable embodiment.

When reference is made to an amount of each component in the present disclosure, then unless explicitly stated otherwise, this means a total amount of plural materials present when there are plural qualifying materials present for each component.

When an exemplary embodiment is described with reference to the drawings in the present disclosure, the configuration of the exemplary embodiment is not limited to the configuration illustrated in the drawings. Moreover, the size of members in the drawings is merely schematic, and relative relationships between the sizes of members is not limited thereto.

In the present disclosure room temperature means 25°C.

### Current Collector

A current collector of an exemplary embodiment of the present disclosure (hereinafter simply referred to as current collector) includes a first layer including a light metal, and a second layer including a Ni chemical element. For the current collector, an X-ray diffraction pattern obtained by radiating a CuKα line onto the second layer using an X-ray diffraction (XRD) device includes diffraction peaks at positions of 2θ = 44.0° to 45.0°, 51.0° to 52.0°, 76.0° to 77.0°, 92.5° to 93.5°, and 98.0° to 99.0°.

The present inventors have investigated enhancing the strength of a lightweight current collector, and have focused on a covering film (namely, the second layer) disposed on a substrate layer (namely, the first layer) of a current collector. They have discovered that the strength of the current collector is enhanced when the covering film has a specific structure.

As illustrated in an Example, described later, a current collector including a first layer that includes a light metal, including a second layer that includes a Ni chemical element, and having an X-ray diffraction pattern that is obtained by radiating a CuKα line onto the second layer using an X-ray diffraction (XRD) device having diffraction peaks at positions of 20 = 44.0° to 45.0°, 51.0° to 52.0°, 76.0° to 77.0°, 92.5° to 93.5°, and 98.0° to 99.0°, has enhanced tensile strength compared to a current collector for which such diffraction peaks are not observed.

Although the mechanism by which the above advantageous effect is exhibited is not entirely clear, it is presumed that the second layer has a specific crystalline structure when the second layer is a covering film including Ni chemical element and having the specific X-ray diffraction pattern. Moreover, it is presumed that contributing factors to the enhanced strength of the current collector include a strength of the second layer being enhanced thereby, adhesion between the second layer and the first layer being enhanced thereby, and interaction of the second layer with the first layer.

### First Layer

The first layer includes a light metal. The first layer is a substrate layer of the current collector.

The first layer may include one species or two or more species of such a light metal. A proportion of the light metal chemical element contained in the first layer, with respect to the total metal chemical elements forming the first layer, may be at least 50% by weight, at least 60% by weight, or at least 70% by weight. For example, the proportion of the light metal contained in the first layer, with respect to the total metal chemical element forming the first layer, may be not greater than 100% by weight, not greater than 90% by weight, or not greater than 80% by weight.

The light metal includes metals having a specific weight of not greater than 4.5. Specifically, examples of the light metal include Al chemical element, Mg chemical element, Ti chemical element, Li chemical element, and the like. The first layer preferably includes Al chemical element from the perspectives of weight reduction and enhancing the strength of the current collector. The first layer preferably is an Al foil including Al chemical element. The Al foil may be of a pure aluminum series or an alloy series Al foil. For example, in addition to 1000 series which are pure aluminum series such as AL1100, aluminum alloy series having another metal added as an alloy chemical element may also be employed. Specifically, Al foils of 3000 series grades which have Mn chemical element added, such as 3003 grade, 3105 grade, and the like, and 5000 series grades which have Mg chemical element added, such as 5052 grade, 5083 grade, and the like, may be employed therefor.

The thickness of the first layer is not particularly limited and may be selected in consideration of the type, scale, and the like of the battery to be obtained using the current collector. For example, the thickness of the first layer may be not less than 5 µm, not less than 7 µm, not less than 10 µm, or not less than 20 µm. For example, the thickness of the first layer may be not greater than 100 µm, not greater than 70 µm, or not greater than 50 µm. From the perspectives of reducing the weight and enhancing the strength of the current collector, the thickness of the first layer is preferably from 7 µm to 100 µm, is more preferably from 7 µm to 50 µm, and is even more preferably from 7 µm to 20 µm.

### Second Layer

The second layer includes Ni chemical element. The second layer is a covering film formed on a substrate layer that is the first layer. For the current collector including the first layer and the second layer, an X-ray diffraction pattern obtained by radiating a CuKα line onto the second layer using an X-ray diffraction (XRD) device has diffraction peaks at positions of 2θ = 44.0° to 45.0°, 51.0° to 52.0°, 76.0° to 77.0°, 92.5° to 93.5°, and 98.0° to 99.0°. These diffraction peaks are derived from the Ni chemical element. In the current collector, a specific Ni-derived structure is formed in the second layer, as evidenced by diffraction peaks at all of the 2θ positions 44.0° to 45.0°, 51.0° to 52.0°, 76.0° to 77.0°, 92.5° to 93.5°, and 98.0° to 99.0°, thereby enhancing the strength of the current collector.

The second layer may include a chemical element other than the Ni chemical element. Moreover, the X-ray diffraction pattern obtained by radiating a CuKα line onto the second layer using the XRD device may have diffraction peaks other than the above diffraction peaks.

Reference to having a peak in an X-ray diffraction pattern means, in XRD analysis using an XRD device, being able to detect a peak irrespective of width of 2θ when processing has been performed for background correction, noise component removal, and the like.

The conditions of measurement by the XRD device are employing X-rays of a CuKα line (namely, 1.54Å) for 20 = 5° to 100°. Moreover, the measurement environment may be in the atmosphere or in an inert gas atmosphere. Examples of an inert gas include argon or nitrogen. A stepping size is preferably from 0.01° to 0.03°, a scan speed is preferably performed at from 1°/minute to 2°/minute.

When the first layer includes the Al chemical element, the X-ray diffraction pattern obtained by radiating a CuKα line on the second layer as the current collector target preferably further includes a diffraction peak derived from Al chemical element from the perspective of reducing the weight and enhancing the strength of the current collector. A diffraction peak derived from Al chemical element is derived from Al chemical element contained in the first layer. In consideration of influences such as the measurement conditions or background noise, the diffraction peak derived from Al chemical element is typically at a position of 20 = 38.5 ± 0.5°, 44.7 ± 0.5°, 65.1 ± 0.5°, 78.2 ± 0.5°, or 82.4 ± 0.5°. Note that, from out of the above, the diffraction peak derived from Al chemical element preferably includes at least one diffraction peak of 2θ = 65.1 ± 0.5° or 78.2 ± 0.5°, and more preferably includes both diffraction peaks at 2θ = 65.1 ± 0.5° and 78.2 ± 0.5°.

Note that when the first layer includes a chemical element other than Al chemical element, from the perspective of reducing the weight and enhancing the strength of the current collector, the X-ray diffraction pattern obtained by radiating a CuKα line on the second layer of the current collector preferably further has a diffraction peak derived from a chemical element other than Al chemical element that is included in the first layer, in addition to the diffraction peak based on the Ni chemical element of the second layer.

The second layer may cover substantially the entire surface of the first layer, or may cover portions thereof. From the perspectives of reducing the weight and enhancing the strength of the current collector, the type of the electrode layer contacting the current collector, and the like, a covering ratio of the surface of the first layer by the second layer is preferably at least 50%, at least 70%, at least 80%, or 100%. The covering ratio is a percentage value obtained by dividing a surface area of the current collector for the second layer by the surface area of the first layer. The covering ratio of the second layer is preferably a covering ratio such that there is a diffraction peak derived from the first layer such as Al chemical element or the like in an X-ray diffraction pattern obtained by radiating a CuKα line on the second layer.

The thickness of the second layer is not particularly limited, and may be selected in consideration of the type, scale, and the like of the battery obtained using the current collector. For example, the thickness of the second layer may be not less than 0.1 µm, not less than 0.5 µm, or not less than 1 µm. For example, the thickness of the second layer may be not greater than 10 µm, not greater than 5 µm, or not greater than 3 µm. From the perspectives of reducing the weight and enhancing the strength of the current collector, the thickness of the second layer is preferably from 0.1 µm to 5 µm, and is more preferably from 0.1 µm to 3 µm. The thickness of the second layer is preferably a thickness such that there is a diffraction peak derived from the first layer such as Al chemical element or the like in the X-ray diffraction pattern obtained by radiating a CuKα line on the second layer.

A combination of the covering ratio of the second layer the thickness of the second layer is preferably, from the perspectives of reducing the weight and enhancing the strength of the current collector, a combination of covering ratio and thickness such that there is a diffraction peak derived from Al chemical element or the like of the first layer in the X-ray diffraction pattern obtained by radiating a CuKα line on the second layer.

A tensile strength of the current collector at room temperature is, from a perspective of preventing breaking, such as during conveying the current collector, preferably at least 19 kgf/mm², and is more preferably at least 21 kgf/mm². The tensile strength of the current collector is a value measured by the following method. Namely, a test piece of the current collector is produced by punching a dumbbell shape out using a Thompson blade molded in the shape of a dumbbell No. 6 as described in JIS K 6251. The two sides of the test piece produced thereby are then gripped by a tensile test machine and pulled apart at a speed of 2 mm/min, a strength is measured at breakage, and the measured value is taken as the tensile strength of the current collector.

As long as there is no impediment to reducing the weight and enhancing the strength of the current collector, the current collector may, in addition to the first layer and the second layer, include one layer or plural layers as other layers to impart desired characteristics, such as conductivity, strength, or the like.

### Current Collector Layer Configuration

The current collector of an exemplary embodiment of the present disclosure may be in a state in which the second layer is arranged on only one face of the first layer, or may be in a state in which the second layer is arranged on both faces of the first layer. The former results in a layer configuration of first layer/second layer. The latter results in a layer configuration of second layer/first layer/second layer. In whichever of these layer configurations, the current collector has an X-ray diffraction pattern obtained by radiating a CuKα line on the second layer using an XRD device that includes diffraction peaks at positions of 2θ = 44.0° to 45.0°, 51.0° to 52.0°, 76.0° to 77.0°, 92.5° to 93.5°, and 98.0° to 99.0°.

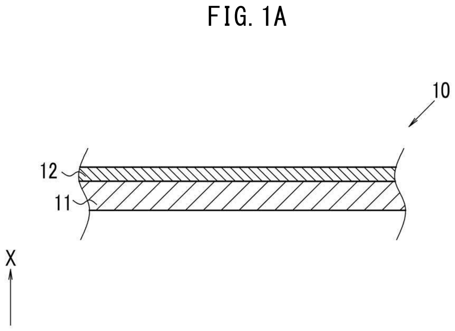

As illustrated in Fig. 1A, a current collector 10 of an exemplary embodiment of the present disclosure includes a first layer 11 and a second layer 12. Direction X is a stacking direction of the current collector 10.

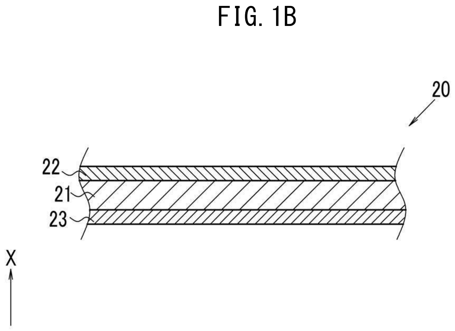

As illustrated in Fig. 1B, a current collector 20 of an exemplary embodiment of the present disclosure includes a first layer 21, a second layer 22, and a second layer 23. The second layer 22 and the second layer 23 are respectively arranged on the two faces of the first layer 21. The direction X is a stacking direction of the current collector 20.

The current collector that is an exemplary embodiment of the present disclosure may include one face that functions as a positive electrode current collector, and another face that functions as a negative electrode current collector. A current collector such as this may, for example, be employed as a current collector of a battery having a bipolar structure.

The current collector of the present disclosure may include an electrode layer arranged on one face or both faces. In cases in which an electrode layer has been disposed on both faces of the current collector, the electrodes arranged on both faces of the current collector may be one or other out of positive electrodes or negative electrodes, or one of the electrode layers disposed on the two faces of the current collector may be a positive electrode and the other thereof may be a negative electrode.

A configuration in which the electrode layers disposed on both faces of the current collector are either positive electrodes or negative electrodes may, for example, be applied to a battery having a monopolar structure.

A configuration in which one of the electrode layers disposed on the two faces of the current collector is a positive electrode and the other thereof is a negative electrode may, for example, be employed in a battery having a bipolar structure.

The electrode layer(s) disposed on one face or both faces of the current collector may be in a state of contact with face(s) on which the second layer(s) of the current collector is/are arranged. The electrode layer contacting a face on which a second layer of the current collector is arranged may be a positive electrode layer or a negative electrode layer, however, the electrode layer is more preferably a negative electrode layer from the perspective of achieving more significant advantageous effects such as alloying with lithium-ions or the like by the second layer of the current collector.

### Current Collector Manufacturing Method

A manufacturing method of a current collector of an exemplary embodiment of the present disclosure (hereinafter simply referred to as current collector manufacturing method) includes a process using electroplating to form a second layer containing Ni chemical element on a first layer containing a light metal (hereafter referred to as a second layer forming process). Due to using electroplating to form the second layer containing the Ni chemical element on the first layer containing a light metal, a current collector can be obtained with an X-ray diffraction pattern obtained by radiating a CuKα line on the second layer using an XRD device that includes diffraction peaks at positions of 2θ = 44.0° to 45.0°, 51.0° to 52.0°, 76.0° to 77.0°, 92.5° to 93.5°, and 98.0° to 99.0°.

The current collector manufacturing method may be any method capable of using electroplating to form the second layer containing Ni chemical element on the surface of the first layer containing a light metal. The second layer forming process may, for example when the first layer is an Al foil, include a degreasing treatment process of the first layer, an etching treatment process of the first layer, a zincate treatment of the first layer, processes to prepare electrodes and a plating tank filled with adjusted plating solution, an electroplating process to form the second layer by immersing the first layer in the plating tank and applying a voltage, a cleaning process to clean the first layer formed with the second layer, and the like. Moreover, these processes may each be performed once, or may be performed plural times. Moreover, adhered processing components and the like may be removed by washing with water at the end of each of these processes.

In the processes described above, the conditions of electroplating are not able to be universally decided due to changing according to the type of the plating solution employed, and the like. An example thereof is a plating solution concentration of from 0.2 % by weight to 80% by weight, a solution temperature of from 5°C to 70°C, a current density of 0.5 A/dm² to 60.0 A/dm², and preferably 2.0 A/dm² to 14.0 A/dm², a voltage of 1V to 100V, and a treatment time of from 1 second to 20 minutes. These conditions may be adjusted so as to achieve the desired plating amount, film thickness of the second layer, covering ratio of the second layer, and the like.

In the current collector manufacturing method, details regarding the first layer and the second layer are similar to as described above. This means that preferably in the second layer forming process, the first layer preferably contains Al chemical element. Moreover, the thicknesses of the first layer and the second layer are also similar to those described above. This means that the second layer forming process preferably includes forming the second layer at a thickness of from 0.1 µm to 3 µm on the first layer having a thickness of from 7 µm to 50 µm.

A battery applied with the current collector of an exemplary embodiment of the present disclosure may employ a liquid electrolyte (electrolyte solution) as the electrolyte, may employ a solid electrolyte as the electrolyte, and may employ only a solid electrolyte as the electrolyte.

In the present disclosure, a battery employing a solid electrolyte for at least part of the electrolyte is sometimes called a "solid-state battery", and a battery employing only a solid electrolyte as the electrolyte is sometimes called a "fully solid-state battery".

### Battery

A battery of an exemplary embodiment of the present disclosure (hereinafter sometimes referred to as battery) includes a structure of a first current collector, a first electrode layer, an electrolyte layer, a second electrode layer, and a second current collector arranged in this sequence (hereinafter sometimes referred to as a laminated electrode structure), with the first current collector being a current collector (hereinafter sometimes referred to as a specific current collector) that includes the first layer containing a light metal and the second layer containing Ni chemical element, and having an X-ray diffraction pattern obtained by radiating a CuKα line on the second layer using an X-ray diffraction (XRD) device including diffraction peaks at positions of 2θ = 44.0° to 45.0°, 51.0° to 52.0°, 76.0° to 77.0°, 92.5° to 93.5°, and 98.0° to 99.0°.

In the present disclosure, sometimes the first current collector and the second current collector are referred to in general as "current collectors" without discriminating therebetween, and sometimes the first electrode layer and the second electrode layer are referred to in general as "electrode layers" without discriminating therebetween.

In a battery, the second current collector is a positive electrode current collector when the first current collector is a negative electrode current collector, and the second current collector is a negative electrode current collector when the first current collector is a positive electrode current collector.

In a battery, the second electrode layer is a positive electrode layer when the first electrode layer is a negative electrode layer, and the second electrode layer is a negative electrode layer when the first electrode layer is a positive electrode layer.

In a battery, the first current collector may be employed as a negative electrode current collector, and may be employed as a positive electrode current collector. In cases in which the first current collector that is the specific current collector is employed as a negative electrode current collector, the first current collector is preferably employed as a negative electrode current collector from the perspective of achieving more significant advantageous effects such as alloying with lithium-ions or the like by the second layer of the specific current collector.

In a battery the first electrode layer may be a negative electrode layer or a positive electrode layer. In cases in which the first electrode layer is a negative electrode layer, preferably the first electrode layer is a negative electrode layer from the perspective of achieving more significant advantageous effects such as alloying with lithium-ions or the like by the second layer of the specific current collector.

In cases in which the first electrode layer, which is a specific current collector, is a negative electrode layer, preferably the negative electrode layer includes a negative electrode active material that reacts at a potential of 0.3 V or less vs. Li/Li⁺ from the perspective of battery performance properties.

In a battery, the type of the electrode active material contained in the first electrode layer is not particularly limited. In cases in which the electrode active material contained in the first electrode layer contains at least one species selected from the group consisting of Si chemical element and C chemical element, Si chemical element or C chemical element is preferably contained as the electrode active material in the first electrode layer from the perspective of achieving more significant advantageous effects such as suppressing reaction by the second layer of the specific current collector with the electrode active material and the first layer. The electrode active material may include a covering layer. The covering layer may employ various materials according to purpose and the like.

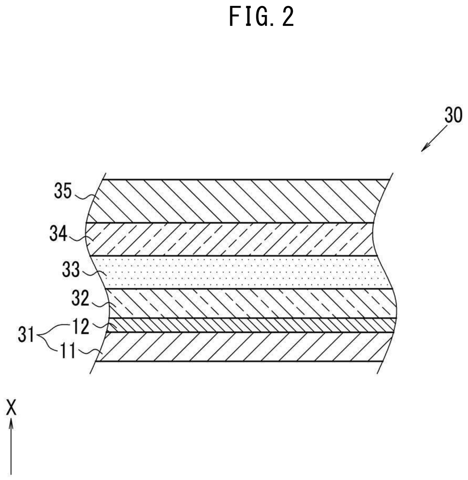

As illustrated in Fig. 2, the laminated electrode structure 30 contained in a battery has a structure that includes a first current collector 31, which is the specific current collector, a first electrode layer 32, an electrolyte layer 33, a second electrode layer 34, and a second current collector 35 arranged in this sequence.

The first current collector 31 includes a first layer 11 that includes a light metal, includes a second layer 12 that includes a Ni chemical element, and has an X-ray diffraction pattern obtained by radiating a CuKα line on the second layer using an X-ray diffraction (XRD) device including diffraction peaks at positions of 2θ = 44.0° to 45.0°, 51.0° to 52.0°, 76.0° to 77.0°, 92.5° to 93.5°, and 98.0° to 99.0°.

### Current Collector

The type of the current collector configuring the laminated electrode structure is not particularly limited as long as at least the first current collector is the specific current collector as described above, and a current collector selected from known current collectors may be employed as a current collector therein. Specific examples of materials of the current collector are a metal selected from Ag chemical element, Cu chemical element, Au chemical element, Al chemical element, Ni chemical element, Fe chemical element, Ti chemical element, or an alloy including one of these metals. There is no particular limitation to the thickness of each of the current collectors, and thickness may be selected in consideration of such factors as the type, scale, and the like of the battery obtained by using the current collectors. A total thickness of all of the current collectors may, for example, be not less than 5 µm, not less than 10 µm, or not less than 20 µm. The total thickness of all of the current collectors may, for example, be not greater than 120 µm, not greater than 80 µm, or not greater than 60 µm. Details and preferable embodiments of the first current collector, which is the specific current collector, are similar to the details and preferable embodiments of the current collector in the exemplary embodiment of the present disclosure described above.

### Electrode Layer

The type of the electrode layer configuring the laminated electrode structure is not particularly limited, and a known electrode layer may be selected and employed therefor. The electrode layer at least contains an electrode active material, and may contain a binder, a conductor, a solid electrolyte, or the like as required. In cases in which the electrolyte layer contains a solid electrolyte, at least one out of the first electrode layer and the second electrode layer that are arranged on the two sides of the electrolyte layer may include a solid electrolyte. In the present disclosure an electrode active material contained in the first electrode layer is also called a first electrode active material, and an electrode active material contained in the second electrode layer is also called a second electrode active material. The first electrode active material is a negative electrode active material when the first electrode layer is a negative electrode layer, and the first electrode active material is a positive electrode active material when the first electrode layer is a positive electrode layer. The second electrode active material is a negative electrode active material when the second electrode layer is a negative electrode layer, and the second electrode active material is a positive electrode active material when the second electrode layer is a positive electrode layer.

Specific examples of the negative electrode active material include a carbon material, an active materials containing Si chemical element, metallic lithium, a lithium-containing alloy, a metal or an alloy that is able to alloy with lithium, an oxide, a transition metal nitride, or the like.

Examples of the carbon material include a graphite material, an amorphous carbon material, a carbon black, an activated carbon, and the like. Examples of a graphite material include natural graphite and artificial graphite. Examples of an amorphous carbon material include hard carbons, soft carbons, cokes, mesophase carbon micro beads (MCMB), mesophase-pitch-based carbon fibers (MCF), and the like. Graphite materials may be covered in a metal or amorphous carbon.

Examples of an active material containing Si chemical element include elemental silicon, silicon alloys (for example, alloys of Si with one or more metal selected from the group consisting of Sn, Ti, Fe, Ni, Cu, Co, and Al), porous silicon, a silicon clathrate compound, a silicon oxide, or the like.

Specific examples of the positive electrode active material include a composite oxide containing lithium and a transition metal (hereafter also referred to as a composite oxide).

Examples of the composite oxide include a composite oxide having a laminar crystalline structure, a composite oxide having a spinel crystalline structure, a composite oxide having an olivine crystalline structure, and the like.

Specific examples of a composite oxide having a laminar crystalline structure include a compound represented by LiMO₂ (wherein M is at least one species of transition metal selected from the group consisting of Ni, Co, and Mn), and a compound resulting from adding a heterogenous chemical element to such a compound. Representative examples of a composite oxide having a laminar crystalline structure include a lithium cobalt oxide (LCO), a lithium nickel cobalt manganese oxide (NCM), and a lithium nickel oxide or a lithium nickel cobalt aluminum oxide (NCA).

A specific example of a composite oxide having a spinel crystalline structure is LiMn₂O₄.

A specific example of a composite oxide having an olivine crystalline structure is LiMPO₄ (wherein M is Fe, Co, Ni, or Mn).

The electrode active material contained in an electrode layer may be one species or a combination of two or more.

A form of the electrode active material may, for example, be a fiber form, a spherical form, a flake form, or the like.

A volume based average particle size of the electrode active material may, for example, be selected in a range of from 5 µm to 50 µm. The volume-based average particle size of the electrode active material is defined as a value (D50) at which the cumulative volume reaches 50% from the smaller particle size side in the volume-based particle size distribution obtained by a laser diffraction/scattering method.

Specific examples of the binder include a polyvinylidene fluoride (PVdF), a polyethylene, a polypropylene, a polyethylene terephthalate, a cellulose, a nitrocellulose, a carboxymethyl cellulose, a polyethylene oxide, a polyepichlorohydrin, a polyacrylonitrile, a styrene-butadiene rubber (SBR), an acrylonitrile-butadiene rubber (NBR), a polyacrylate, a polymethacrylate, a polytetrafluoroethylene (PTFE), and the like.

Examples of the conductor include a carbon material, a metal, an oxide exhibiting conductivity, a nitride exhibiting conductivity, and the like.

Specific examples of carbon materials include carbon black (acetylene black, thermal black, furnace black, and the like), carbon nano tubes (CNT), carbon nano fibers (CNF), vapor-grown carbon fibers (VGCF^{™}), and the like.

The conductor may be one species employed alone of two or more species employed in combination.

Examples of the solid electrolyte include sulfide solid electrolytes, oxide solid electrolytes, polymer solid electrolytes, and the like.

From the perspective of battery performance properties, the solid electrolyte is preferably a sulfide solid electrolyte or a polymer solid electrolyte, with a sulfide solid electrolyte being more preferable from the perspective of thermal stability.

The solid electrolyte may be one species employed alone of two or more species employed in combination.

Examples of the sulfide solid electrolyte include compounds containing a metal chemical element that forms a conductive ion, and sulfur (S).

Examples of the metal chemical element include Li, Na, K, Mg, Ca, and the like. From among these Li is preferably as the metal chemical element.

The sulfide solid electrolyte may contain Li and S, and at least one species selected from the group consisting of P, Si, Ge, Al, and B. From among these a sulfide solid electrolyte containing Li, S, and P (hereafter also referred to as an LPS sulfide solid electrolyte) is preferable.

From the perspective of ion conductivity, the sulfide solid electrolyte may contain a halogen chemical element such as Cl, Br, I, or the like. From the perspective of chemical stability, the sulfide solid electrolyte may contain oxygen (O).

Specific examples of a LPS sulfide solid electrolyte include Li₂S-P₂S₅, Li₂S-P₂S₅-LiI, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S- B₂S₃, LiI-Li₂S-P₂O₅, LiI-Li₃PO₄-P₂S₅, LiBr-LiI- Li₂S-P₂S₅, Li₂S-P₂S₅-ZmSn (wherein in the formula m and n are each positive integers, and Z is Ge, Zn, or Ga), Li₂S-GeS₂, Li₂S-SiS₂-Li₃PO₄, Li₂S-SiS₂-LiₓMO_{y} (wherein in the formula x and y are each positive integers, and M is P, Si, Ge, B, Al, Ga, or In), and the like.

The notation "Li₂S-P₂S₅" means a sulfide solid electrolyte obtained using Li₂S and P₂S₅ as raw materials, and similar applies to other notations.

From among LPS sulfide solid electrolytes, a sulfide solid electrolyte obtained using Li₂S and P₂S₅ is preferable, and a sulfide solid electrolyte satisfying the following formula is more preferable.
Li_{3+x+5y}P_{1-y}S₄ (wherein 0 < x ≤ 0.6, and 0 < y ≤ 0.2)

Examples of oxide solid electrolytes include compounds having a Na₃Zr₂PSi₂O₁₂ (NASICON) crystal structure. Compounds having a NASICON crystalline structure have high ion conductivity, and also have excellent stability in air.

Examples of compounds having a NASICON crystalline structure include phosphate salts containing lithium. Examples of phosphate salts include composite lithium phosphate salts with Ti (for example, Li₁₊ₓAlₓTi₂₋ₓ(PO₄)₃), and compounds of the above composite lithium phosphate salts in which all or part of the Ti has been substituted by a four valency transition metal such as Ge, Sn, Hf, Zr, or the like, or by a three valency transition metal such as Al, Ga, In, Y, La, or the like.

Specific examples of compounds having a NASICON crystalline structure include Li-Al-Ge-P-O based materials (Li₁₊ₓAlₓGe₂₋ₓ(PO₄)₃), Li-Al-Zr-P-O based materials (Li₁₊ₓAlₓZr₂₋ₓ(PO₄)₃), Li-Al-Ti-P-O based materials (Li₁₊ₓAlₓTi₂₋ₓ(PO₄)₃), and the like.

Examples of polymer solid electrolytes include mixtures (complexes) of polymer compounds and electrolyte salts. Specific examples of polymer compounds include polyether based polymer compounds such as a polyethylene oxide (PEO), a polypropylene oxide (PPO), and the like, polyamine based polymer compounds such as a polyethylene imine (PEI), and the like, and polysulfide based polymer compounds such as a polyalkylene sulfide (PAS), and the like. From among these a polyether based polymer compound is preferable.

### Electrolyte Layer

Examples of an electrolyte layer employed in a battery include a separator employed in a battery employing an electrolyte solution, and an electrolyte layer employed in a fully solid-state battery.

The thickness of the electrolyte layer is not particularly limited and may, for example, be selected from a range of 1 µm to 30 µm.

In cases in which the electrolyte layer is a separator, the type of separator is not particularly limited, and a known separator may be selected and employed therefor.

Specific examples of the separator include a porous sheet made from a resin such as a polyethylene, a polypropylene, a polymethyl pentene, a polyester, a cellulose, a polyamide, and the like.

In cases in which the electrolyte layer includes a solid electrolyte, the type of the solid electrolyte included in the electrolyte layer is not particularly limited. For example, a solid electrolyte that may be included in an electrode layer may be selected and employed therefor.

In cases in which the electrolyte layer includes a solid electrolyte, a solid electrolyte may be respectively included in the first electrode layer and the second electrode layer. In such cases, the type of the solid electrolyte included in each of the layers may be the same or different from each other.

In cases in which a battery includes a solid electrolyte, an electrolyte solution may be included at less than 10% by weight with respect to an amount of electrolyte in total together with the solid electrolyte.

In cases in which a battery includes a solid electrolyte, the solid electrolyte may be a composite solid electrolyte including an inorganic solid electrolyte and a polymer electrolyte.

In cases in which a battery includes an electrolyte solution as an electrolyte, the type of the electrolyte solution is not particular limitated, and a known electrolyte solution may be employed therefor.

Specific examples of the electrolyte solution include a solution resulting from dissolving a lithium salt such as LiPF₆, LiFSi, or the like in an organic solvent.

Specific examples of the organic solvent include cyclic or chain-shaped carbonates such as ethylene carbonate (EC), dimethyl carbonate (DMC), diethyl carbonate (DEC), ethyl methyl carbonate (EMC), and the like. The solvent may be a mixture of two or more species of solvent, and may be a mixture including a cyclic carbonate and a chain-shaped carbonate.

The solvent may include an additive such as a vinylene carbonate (VC).

From the perspective of advantageous effects such as suppressing a reaction by the second layer of the specific current collector with the electrode active material and the first layer, a battery preferably is a solid-state battery in which the electrolyte layer includes a solid electrolyte.

### Cladding

The battery may be further provided with cladding. Cladding at least houses the laminated electrode structure described above. Examples of the cladding include a laminate cladding, a case cladding, and the like. A laminate cladding may be formed from a stacked body (laminated film) including a metal layer containing a metal such as aluminum and the like, and a heat sealing layer including a resin that melts when heated.

### Constraining Member

The battery may be further provided with a constraining member. A constraining member imparts a constraining pressure on the above laminated electrode structure in the thickness direction thereof.

The constraining pressure imparted to the laminated electrode structure in the thickness direction may, for example, be at least 0.1 MPa, at least 1 MPa, or at least 5 MPa.

The constraining pressure imparted in the thickness direction to the laminated electrode structure may, for example, be not greater than 100 MPa, not greater than 50 MPa, or not greater than 20 MPa.

### Battery Application

The application of the battery is not particularly limited. Typical application examples are as a power source in a vehicle, an electric machine, or an electricity storage system. From among these, the application of the battery of the present disclosure is preferably as a power source in a vehicle, and preferably as a drive power source in a hybrid vehicle, a plug-in hybrid vehicle, or an electric vehicle.

Examples of the vehicle include an electric four-wheeled vehicle, an electric two-wheeled vehicle, a gasoline vehicle, a diesel vehicle, and the like. Examples of electric four-wheeled vehicles include, for example, a battery electric vehicle (BEV), a plug-in hybrid electric vehicle (PHEV), a hybrid electric vehicle (HEV). Examples of electric two-wheeled vehicle include, for example, an electric motorbike, an electric-assist bicycle, and the like. Examples

Description follows regarding an exemplary embodiment of the present disclosure, with reference to Examples. However, the Examples do not limit the present disclosure.

### Example 1

### Substrate Layer (First Layer)

A 1N30-H material at a thickness of 15 µm was employed as the substrate layer (namely, the first layer). A 1N30-H material is a material based on the description of JIS H 4000. 1N30-H material is a pure aluminum series alloy, having an aluminum purity of at least 99.3%, and is an aluminum foil hard finished by hot rolling.

### Electroplating

Ni was deposited by electroplating on both surfaces of the substrate layer. The electroplating was performed on the Al foil of the substrate layer though a sequence of the following processes 1 to 7.
1. Al foil was immersed in the solution to which sodium carbonate, sodium metasilicate, sodium tripolyphosphate, and surfactant had been added and adjusted to about pH10 at 50°C, and then the Al foil was cleaned with water.
2. The substrate layer resulting from process 1 was immersed in a sodium hydroxide solution at about pH14, and then cleaned with water.
3. The substrate layer resulting from process 2 was immersed in a nitric acid solution, and then cleaned with water.
4. The substrate layer resulting from process 3 was immersed in a solution resulting from dissolving zinc oxide in a sodium hydroxide solution, and then cleaned with water.
5. The substrate layer resulting from process 4 was immersed in a nitric acid solution, and then cleaned with water.
6. The substrate layer resulting from process 5 was immersed in a solution resulting from dissolving zinc oxide in a sodium hydroxide solution, and then cleaned with water.
7. A solution was prepared by dissolving boric acid, nickel sulfate, and nickel chloride in water, and adjusting the pH to about 4.0-4.5 at a temperature of 50°C. In the substrate layer resulting from process 6, a hole was made in the Al foil, and a copper wire was wound around the hole portion. The substrate layer was then immersed in the solution. Subsequently, a current of 5 A/dm² was applied through the copper wire, and electroplating was performed so as to form a 2 µm-thick covering layer of Ni on the surface of the substrate layer.

As described above, a current collector (current collector 1) was obtained with the surfaces of the substrate layer formed with a covering layer (namely, a second layer) containing Ni at 2 µm on each face formed by electroplating on both faces of the substrate layer. The thickness of the current collector 1 was 16 µm.

Note that in the Example and the Comparative Examples, the thickness of the current collector, and the film thickness of the covering layer, are values measured using images of a face of the obtained current collector sectioned along the stacking direction obtained with a scanning electron microscope (SEM) after cutting with a cross section polisher.

### Comparative Example 1

A current collector (current collector 2) was obtained similar to the current collector 1 except in that a plating solution for non-electrolytic plating was employed on a substrate layer (1N30-H material), and a covering layer (namely, a second layer) containing Ni was formed without flowing a current. The thickness of the current collector 2 was 16 µm.

### Comparative Example 2

A current collector (current collector 3) was obtained similarly to in Comparative Example 1 except in that a different plating solution was employed on a substrate layer (1N30-H material), and a covering layer (namely, a second layer) containing Ni was formed without flowing a current. The thickness of the current collector 3 was 14 µm.

### Comparative Example 3

A current collector (current collector 4) was obtained similarly to in Comparative Example 1 except in that different plating conditions were employed on a substrate layer (1N30-H material), and a covering layer (namely, a second layer) containing Ni was formed without flowing a current. The thickness of the current collector 4 was 17 µm.

### Comparative Example 4

An Ni foil with a thickness of 10 µm was placed on an upper surface of a substrate layer (1N30-H material) to obtain a current collector 5.

### Evaluation

### Strength

A breaking strength was measured for the current collector 1 to current collector 4 obtained by Example 1 and Comparative Example 1 to Comparative Example 3.

For the breaking strength, a punched test piece was produced by punching the obtained current collector out in a dumbbell shape using a Thompson blade molded in the shape of a dumbbell No. 6 as described in JIS K 6251. The two sides of the punched test piece were then gripped by a tensile test machine and pulled apart at a speed of 2 mm/min, and a strength measured at breakage (kgf/mm²). For the breaking strength, the following equation was employed to calculate the breaking strength of each of the examples, taking the breaking strength of the Example 1 as 100. The breaking strength calculated for each of the Examples are listed in Table 1.

Calculation Equation: measured breaking strength/breaking strength of Example 1 × 100.

### X-ray Diffraction Pattern

X-ray diffraction patterns were acquired by an XRD device for each of current collectors 1 to 5 obtained in Example 1 and Comparative Examples 1 to 4.

Each of current collectors 1 to 4 was cut into a square specimen of 2 cm × 2 cm, and an X-ray diffraction pattern was acquired using an XRD device (Rigaku Corporation). The measurement conditions were irradiation with a CuKα line, 20 = 5° to 100°, in the atmosphere, a scan speed of 5 degrees/minute, and a scan step of 0.02 degrees.

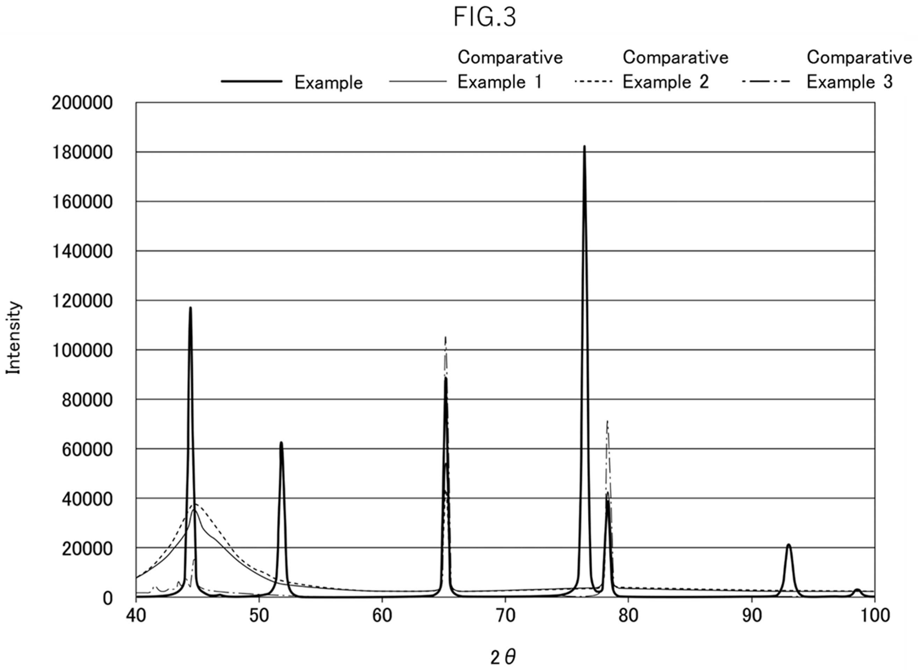

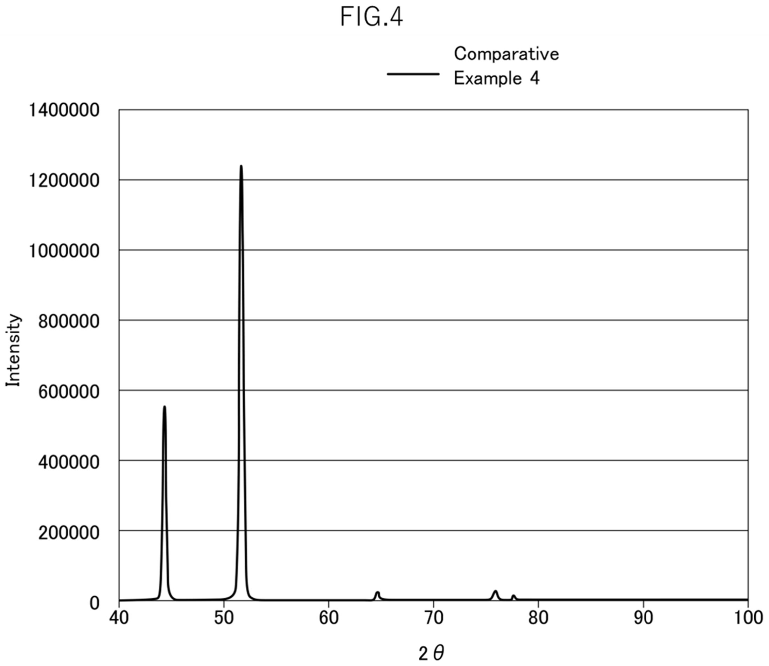

Graphs of the respective X-ray diffraction patterns of current collectors 1 to 4 are shown in Fig. 3, and a graph of the X-ray diffraction pattern of current collector 5 is shown in Fig. 4.

**Table 1**

| | Example 1 | Comparative Example 1 | Comparative Example 2 | Comparative Example 3 |
|---|---|---|---|---|
| Current Collector Thickness (µm) | 16 | 16 | 14 | 17 |
| Strength | 100 | 60 | 28 | 77 |

As illustrated in Table 1, Fig. 3, and Fig. 4, the current collector 1 that includes a first layer containing an Al foil and a second layer containing a Ni chemical element, and that has an X-ray diffraction pattern obtained by radiating a CuKα line onto the second layer using a XRD device including diffraction peaks at positions of 2θ = 44.0° to 45.0°, 51.0° to 52.0°, 76.0° to 77.0°, 92.5° to 93.5°, and 98.0° to 99.0°, was lighter in weight due to employing the Al foil and was also confirmed to have enhanced strength.

## Claims

1. A current collector, comprising:
a first layer including a light metal; and
a second layer including Ni chemical element, wherein:
the current collector has an X-ray diffraction pattern obtained by irradiating CuKα radiation onto the second layer using an X-ray diffraction (XRD) device, the X-ray diffraction pattern including diffraction peaks at positions of 2θ = 44.0° to 45.0°, 51.0° to 52.0°, 76.0° to 77.0°, 92.5° to 93.5°, and 98.0° to 99.0°.

2. The current collector of claim 1, wherein the first layer includes Al chemical element.

3. The current collector of claim 2, wherein the X-ray diffraction pattern further includes a diffraction peak derived from Al chemical element.

4. The current collector of claim 1, wherein the first layer has a thickness of from 7 µm to 50 µm, and the second layer has a thickness of from 0.1 µm to 3 µm.

5. The current collector of claim 1, wherein the current collector has a tensile strength at room temperature of at least 19 kgf/mm².

6. A current collector manufacturing method, comprising using electroplating to form a second layer including Ni chemical element on a first layer including a light metal.

7. The current collector manufacturing method of claim 6, wherein the first layer includes Al chemical element.

8. The current collector manufacturing method of claim 6, wherein the method includes forming the second layer at a thickness of from 0.1 µm to 3 µm on the first layer having a thickness of from 7 µm to 50 µm.

9. A battery comprising a first current collector, a first electrode layer, an electrolyte layer, a second electrode layer, and a second current collector, wherein:
the first current collector is the current collector of any one of claim 1 to claim 5.

10. The battery of claim 9, wherein the first electrode layer is a negative electrode layer.

11. The battery of claim 10, wherein the negative electrode layer includes a negative electrode active material that reacts at a potential of 0.3 V or less vs. Li/Li⁺.

12. The battery of claim 9, wherein:
the battery is a solid-state battery; and
the electrolyte layer contains a solid electrolyte.
